Europäisches Patentamt

**European Patent Office**

Office européen des brevets

(11) Publication number:

**0 107 432**
A2

(12) # EUROPEAN PATENT APPLICATION

(21) Application number: 83306122.9

(22) Date of filing: 10.10.83

(51) Int. Cl.³: **C 01 B 33/107**

(30) Priority: 08.10.82 JP 177136/82

(43) Date of publication of application: 02.05.84
Bulletin 84/18

(84) Designated Contracting States: **DE FR GB**

(71) Applicant: **Chisso Corporation, 6-32,
Nakanoshima 3-chome Kita-ku, Osaka-shi Osaka-fu (JP)**

(72) Inventor: **Ohtake, Nobumasa Room 2203, Kankyo
Kagaku, Center Apartment house 10-2 Otsutomocho,
Kanazawaku, Yokohamashi Kanagawaken (JP)**
Inventor: **Koga, Isao, 935, Usuidai, Sakurashi Chibaken
(JP)**
Inventor: **Terui, Yohji, 2505-3, Asahigaokacho, Chibashi
Chibaken (JP)**

(74) Representative: **Ruffles, Graham Keith et al, MARKS &
CLERK 57-60 Lincoln's Inn Fields, London WC2A 3LS
(GB)**

(54) **Process for producing dichlorosilane.**

(57) A process for producing dichlorosilane from silicon and hydroge chloride in the presence of copper as catalyst with a higher yield is characterized by making coexistent with copper a metal having a Pauling's electronegativity of 1.9 or more such as Rh, Ru, Os, Ag, Bi, Te, etc and/or a nitrogen compound such as ammonia, ammonium salts, amines, salts thereof, etc.

EP 0 107 432 A2

M&C FOLIO: 799P46938       WANGDOC: 0215C

PROCESS FOR PRODUCING DICHLOROSILANE

This invention relates to a process for producing dichlorosilane.

The recent remarkable development of the electronics industry has brought about a rapid growth in the silicon industry for semiconductors. Equally, in view of the problem that fossil energy is being exhausted, utilization of the solar energy has been regarded as a pressing need, and thus the use of high purity metal silicon for solar electricity generation has been energetically studied.

Heretofore, trichlorosilane has been mainly used as the raw material for high purity metal silicon for semiconductors, but utilization of dichlorosilane has recently been noted as a more economic process. Furthermore, it has been noted to use dichlorosilane as a raw material for epitaxial silicon and amorphous silicon. Thus, the advent of a cheap process for producing dichlorosilane has been desired.

The past processes for producing dichlorosilane have been directed mainly to disproportionation processes. According to this process, however, 1,700 kg of tetrachlorosilane is byproduced in producing 1,000 kg of dichlorosilane. Conversion of such tetrachlorosilane into trichlorosilane requires high temperature and high pressure and hence it is uneconomical. Thus, a process for producing dichlorosilane directly from silicon has been noted. As such a process, USA Patent 2,499,009 discloses that silicon can be reacted with hydrogen chloride in the presence of copper as catalyst. However, the proportion of dichlorosilane produced is lower than that of trichlorosilane produced; hence such a process is unsatisfactory.

The object of the present invention is to improve the known process of reacting silicon with hydrogen chloride in the presence of copper as catalyst to increase the proportion of dichlorosilane which is produced.

The present invention resides in a process of reacting silicon with hydrogen chloride in the presence of copper as catalyst, the improvement which comprises using a metal having a Pauling's electronegativity of 1.9 or more and/or a nitrogen compound, with the copper.

In order to make the reaction rate higher, it is preferred that silicon, copper and the other metal catalyst, if any, be in powdery or porous form and these components be sufficiently mixed with each other. For adequate mixing in this case, there may be employed a process of sufficiently mixing them in the form of powder as small as possible or a process of converting them into an alloy (including the case of melt-mixing and those obtained by thermal diffusion).

As the metal used in the present invention and having a Pauling's electronegativity of 1.9 or more, Ru, Os, Rh, Ir, Pt, Ag, Au, Bi, Te, Po, Tc and Re are exemplified, and mixtures thereof may be used. Among these metals, Ru, Os, Rh, Ag, Bi and Te are preferred.

As the nitrogen compounds usable in the present invention, any of those containing nitrogen may be used and examples thereof are ammonia, ammonium salts, amines, salts thereof, nitro compounds, nitroso compounds, cyanides including nitriles and cyano-complexes and metal nitrides such as $Si_3N_4$. As the nitrogen compoumds, those in liquid or solid form are preferred, and also those having a high proportion of nitrogen are preferred. Further, it is also preferred to sufficiently mix these nitrogen compounds with silicon and copper.

The amounts of the catalyst components, i.e. the copper, the metal having a Pauling's electronegativity of 1.9 or more and the nitrogen compound used in the preesent process when based on 100 parts by weight of silicon may be about 1 to 100 parts by weight, about 0.1 to 20 parts by weight and about 1 to 100 parts by weight, respectively.

In order to contact silicon and copper and other catalyst components with hydrogen chloride, the silicon, etc may be placed in an atmosphere of hydrogen chloride or hydrogen chloride diluted with an inert gas, or these gases may be passed through silicon, etc in contact therewith.

The reaction temperature in the present invention is preferably in the range of about 200 to 400°C. If it is lower than 200°C, the reaction rate is small, and if it exceeds 400°C, there is a fear that dichlorosilane is decomposed.

According to the present invention, it is possible to produce dichlorosilane directly from silicon and hydrogen chloride with a high yield; hence the present invention has a great commercial meaning.

The present invention will be further described by way of non-limiting Examples and by way of reference to Comparitive Examples.

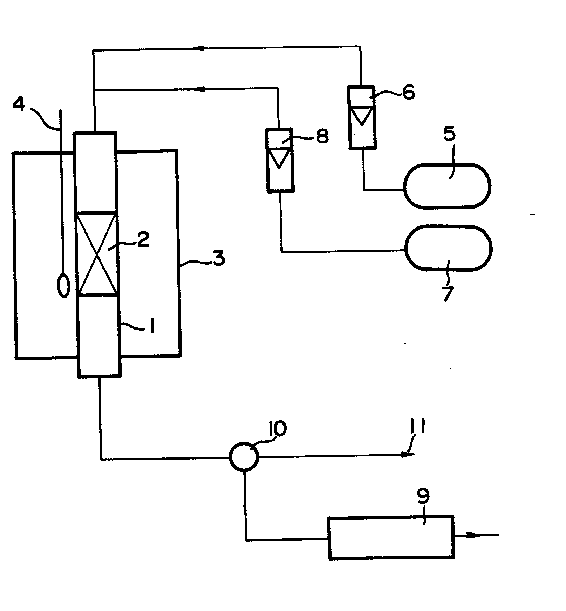

In the following, reference is made to the accompanying drawing which shows a flow sheet illustrating an apparatus employed in the Examples and Comparative Examples.

The drawing shows a reaction tube 1 with a layer of 2 of silicon and catalyst in an electric furnace 3 wose temperature is monitored with thermometer 4. Flow meters 6,8 monitor the flow of $N_2$ and HCl from respective cylinders 5,7, while GLC equipment 9 can monitor the products flowing through cut-off valve 10 which alternatively feeds to purge 11

Examples 1 to 9 and Comparative Examples 1 to 3

Using the reaction apparatus shown in the drawing, 1 g of powder of industrial silicon (particle size: 150 to 200 meshs), metal copper and the other specified catalyst were filled in a reaction tube (inner diameter: 5mm) 1. A mixed gas of HCl and $N_2$ was passed through the tube in a proportion of HCl: 5 ml/min and $N_2$: 40 ml/min. The resulting gases formed were analysed using gas chromatography. The results are shown in Table 1.

In Table 1, the amounts of catalysts used are shown in terms of weight ratio based on the weight of silicon, and the proportion of the gases formed is shown in terms of GLC %. Further, in this Table, the electro-negativities of the metal catalyst components used are shown in the parentheses adjacent to the symbols of the metal elements.

As seen from the Table, the yields of dichlorosilane of the present invention are much higher than those of the prior art.

## Table 1

| Nos. of Examples and Compar. exs. | Catalyst (Kind) | (Amount) | Reaction temperature (°C) | $HCl$ | $H_2SiCl_2$ | $HSiCl_3$ | $SiCl_4$ | $\dfrac{H_2SiCl_2}{HSiCl_3}$ |
|---|---|---|---|---|---|---|---|---|
| Example 1 | Cu(1.9)<br>NH$_4$Cl | 0.1<br>0.3 | 250 | 0 | 14.1 | 85.6 | 0.3 | 0.165 |
| " 2 | Cu<br>N(Ph)$_3$ | 0.1<br>0.3 | 250 | 0 | 15.1 | 84.5 | 0.4 | 0.178 |
| " 3 | Cu<br>Rh(2.2)<br>NH$_4$Cl | 0.05<br>0.05<br>0.05 | 300 | 0 | 24.0 | 75.6 | 0.4 | 0.317 |
| " 4 | Cu<br>Rh | 0.1<br>0.03 | 300 | 2.3 | 24.2 | 73.5 | 0 | 0.329 |
| " 5 | Cu<br>Ru(2.2) | 0.1<br>0.03 | 300 | 2.1 | 23.6 | 74.3 | 0 | 0.318 |
| " 6 | Cu<br>Ag(1.9) | 0.1<br>0.03 | 300 | 1.6 | 22.4 | 76.0 | 0 | 0.295 |
| " 7 | Cu<br>Te(2.1) | 0.1<br>0.03 | 300 | 2.6 | 22.5 | 74.9 | 0 | 0.300 |
| " 8 | Cu<br>Os(2.2) | 0.1<br>0.03 | 300 | 0 | 23.0 | 77.0 | 0 | 0.298 |
| " 9 | Cu<br>Bi(1.9) | 0.1<br>0.03 | 300 | 2.4 | 23.2 | 74.3 | 0.1 | 0.312 |
| Compar. ex. 1 | Cu | 0.1 | 250 | 0 | 7.0 | 92.5 | 0.5 | 0.075 |
| " 2 | None | – | 250 | 0 | 6.2 | 93.2 | 0.6 | 0.067 |
| " 3 | Cu<br>Ni(1.8) | 0.1<br>0.03 | 300 | 0.1 | 3.0 | 95.6 | 0.3 | 0.031 |

CLAIMS

1. A process of reacting silicon with hydrogen chloride in the presence of copper as catalyst, characterized in that a metal having a Pauling's electronegativity of 1.9 or more and/or a nitrogen compound is used with the copper.

2. A process according to claim 1 wherein the amounts of copper, the metal having a Pauling's electronegativity of 1.9 or more and the nitrogen compound are respectively 1 to 100 parts by weight, 0.1 to 20 parts by weight and 1 to 100 parts by weight based on 100 parts by weight of silicon.

3. A process according to claim 1 or 2 wherein the reaction is carried out at 200°C to 400°C.

4. A process according to claim 1 wherein the metal having a Pauling's electronegatibvity of 1.9 or more is at least one of Ru, Os, Rh, Ir, Pt, Ag, Au, Bi, Te, Po, Tc and Re.

5. A process according to claim 4 wherein the metal having a Pauling's electronegativity of 1.9 or more is at least one of Ru, Os, Rh, Ag, Bi and Te.

0107432

6. A process according to any preceding claim wherein the nitrogen compound is at least one of ammonia, ammonium salts, amines, salts thereof, nitro compounds, nitroso compounds, cyanides and metal nitrides.

7. A process according to claim 6 wherein the nitrogen compound is at least one of ammonia, ammonium salts, amines and salts thereof.

0107432

1/1